# EUROPEAN PATENT APPLICATION

(11) **EP 1 737 156 A2**
(43) Date of publication of application: **27.12.2006**
(21) Application number: 06253260.1
(22) Date of filing: 23.06.2006
(51) Int. Cl.: H04L 9/32

(54) **Password encrypted data storage and retrieval method**

(30) Priority: 24.06.2005 CN 200510079695
(71) Applicant: HiTRUST. COM Incorporated, Tortola (VG)
(72) Inventor: Wu, Jia-Chiang, Taipei (TW)
(74) Representative: Pratt, David Martin

(57) **Abstract**

In a data encryption method, a request to input an encryption password set (22) is made upon receipt of an encryption request to encrypt data, and the data are encrypted such that the encrypted data can be decrypted using one of the encryption password set (22) and a predetermined supervisor password (21 set upon receipt of the encryption password set (22). Thus, during decryption, one of the encryption password set (22) and the supervisor password set (21) can be used for decryption, thereby providing a restoring mechanism.

## Description

The invention relates to a data encryption and decryption method, more particularly to a data encryption and decryption method that permits encryption with a plurality of passwords and that has a restoring mechanism.

With the popularity of the Internet, people are now accustomed to using digitized electronic data in place of written data. People generally store data in a computer system. Therefore, when a user leaves his/her computer, a third party may try to steal the data in the computer. Particularly, when networks are so popular nowadays, hackers can steal data in a computer through networks. Thus, data security has become a very important subject in the world of information, especially for companies.

Currently, there are various encryption techniques available on the market to allow the user to encrypt data. Thus, even if a third party can obtain encrypted data, he/she cannot decrypt the data without the correct password, and is unable to gain access to the content of the encrypted data. The security of data is therefore ensured.

Current encryption techniques often require the user to input a password, and to perform encryption based on the inputted password. When decryption is desired, it is merely necessary to enter the previously inputted password to proceed with decryption. However, the user may forget the password inputted during encryption with the encryption of more and more data or with the passage of time, so that there is a likelihood that the encrypted data cannot be decrypted, thereby resulting in user inconvenience.

Furthermore, with the popularity of networks, transmitting data over networks to other people is commonplace, especially the transmission of data to several people at the same time. To ensure the security of data during the process of transmission, the data to be transmitted are encrypted using a password prior to transmission so that the remote end can decrypt the data using the same password upon receipt thereof. However, when it is necessary to inform all the remote ends to receive the data of the password, leak of the password is likely to result.

In view of the undesirable fact that encrypted data cannot be decrypted when the associated password is forgotten, the applicant contemplates that during encrypting, aside from encrypting based on a password inputted by the user, encrypting based on a backup supervisor password is also conducted automatically. Hence, in case the user password is forgotten, decryption can be conducted using the supervisor password, thereby facilitating data restoration by the user.

Therefore, an object of the present invention is to provide a data encryption method having a restoring mechanism.

Another obj ect of the present invention is to provide a data encryption method that permits enhanced security and convenient operation.

A further object of the present invention is to provide a method for encrypting and decrypting data in which different passwords can be used for encryption at the same time and different passwords can be used for decryption.

Accordingly, a data encryption method of the present invention includes the following steps:
(A) upon receipt of an encryption request to encrypt data, requesting input of an encryption password set; and
(B)upon receipt of the encryption password set, encrypting the data such that the encrypted data can be decrypted using one of the encryption password set and a predetermined supervisor password set.

Other features and advantages of the present invention will become apparent in the following detailed description of the preferred embodiment with reference to the accompanying drawings, of which:
Figure 1 illustrates an example of an electronic machine for implementing a data encryption/decryption module according to the present invention;
Figure 2 illustrates the preferred embodiment of a data encryption/decryption module according to the present invention;
Figure 3 is a flowchart of the preferred embodiment of a method for data encryption/decryption according to the present invention;
Figure 4 is a flowchart of an encryption process of the preferred embodiment;
Figure 5 is a flowchart of a decryption process of the preferred embodiment;
Figure 6 illustrates an example a file manager window used in conjunction with the preferred embodiment;
Figure 7 illustrates an example of a file encryption dialog window that is displayed during the encryption process of the preferred embodiment;
Figure 8 illustrates an example of a password error window in the encryption process of the preferred embodiment;
Figure 9 illustrates another example of a file manager window used in conjunction with the preferred embodiment;
Figure 10 illustrates an example of a file encryption inprocess window that is displayed during the encryption process of the preferred embodiment;
Figure 11 illustrates an example of an encryption result window that is displayed during the encryption process of the preferred embodiment;
Figure 12 illustrates an example of a file decryption dialog window that is displayed during the decryption process of the preferred embodiment;
Figure 13 illustrates an example of a password error window that is displayed during the decryption process of the preferred embodiment; and
Figure 14 illustrates an example of a decryption result window that is displayed during the decryption process of the preferred embodiment.

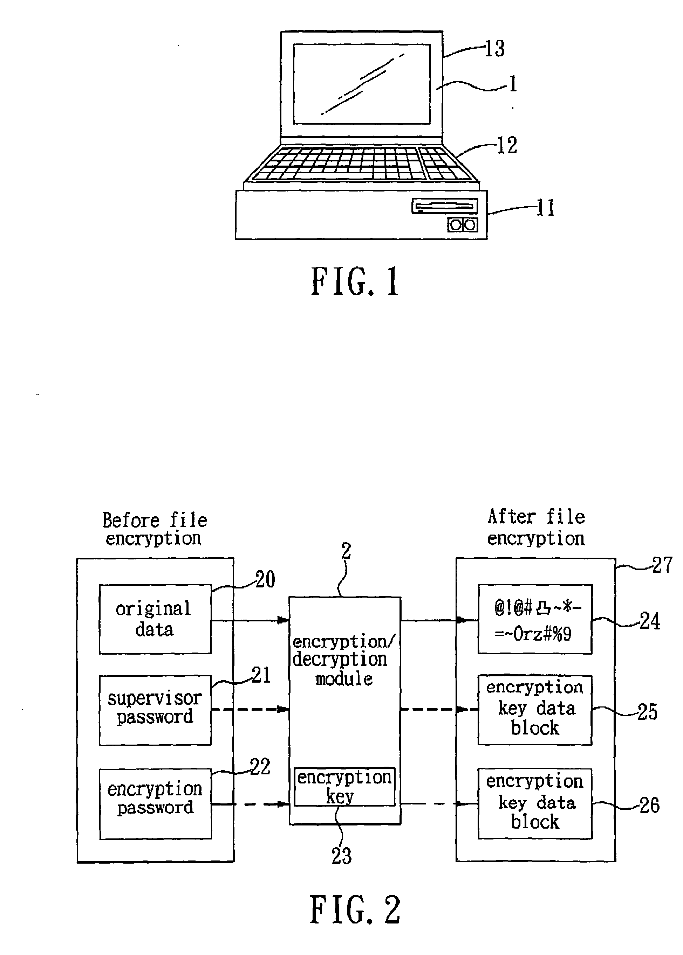

An encryption/decryption method and an encryption/decryption module of the present invention can be implemented in an electronic machine. Referring to Figure 1, the encryption/decryption method and the encryption/decryption module are implemented in a computer 1 in this embodiment. The computer 1 includes a processing device 11, an input device 12 such as a mouse or a keyboard, and a display 13. Certainly, the preferred embodiment can also be implemented in other types of electronic machines, such as a digital personal assistant (PDA), a smart phone, etc., and should not be limited to the disclosure of the preferred embodiment herein. The computer 1 stores a plurality of entries of data.

Referring to Figure 2, the preferred embodiment uses an encryption/decryption module 2 (including an encryption module and a decryption module) to execute the encryption/decryption method. The encryption/decryption module 2 of the preferred embodiment is a chip. Certainly, as known to those skilled in the art, the encryption/decryption module 2 can have other forms, such as software, and should not be limited to the disclosure of the preferred embodiment herein.

In addition, current encryption/decryption techniques are generally divided into symmetric encryption/decryption techniques (i.e., symmetric ciphering technique) and asymmetric encryption/decryption techniques. Since asymmetric encryption/decryption techniques require construction of higher end systems and use of thresholds (e.g., application for and use of certification, and cooperation with certification authentication centers and relevant hardware equipment), and the data processing efficiency is relatively low, the encryption/decryption module 2 of the preferred embodiment employs a symmetric encryption/decryption technique. Symmetric encryption/decryption algorithms and corresponding encryption key lengths that can be adopted are set forth below:

| Algorithm | Encryption Key Length |
|---|---|
| DES | 64-bits |
| 3DES | 128-bits |
| 3DES | 192-bits |
| AES | 128-bits |
| AES | 192-bits |
| AES | 256-bits |

In the preferred embodiment, the AES encryption/decryption algorithm is adopted. In addition, in order to solve the problem that encrypted data cannot be accessed due to failure to remember the associated password, as shown in Figure 2, the encryption/decryption module 2 of the preferred embodiment uses a supervisor password set 21 and an encryption password set 22 during encryption of original data 20. The original data 20 can be one of files, folders, and a combination thereof, i.e., the original data 20 can be one or more files, one or more folders, and a combination of files and folders. The supervisor password set 21 includes at least one password, and the encryptionpasswordset 22 includes at least one password. In the preferred embodiment, each of the supervisor password set 21 and the encryption password set 22 includes one password. The supervisor password 21 is a password set by the user in advance, e.g., when the encryption/decryption module 2 is installed in the computer 1. The encryption password 22 is required to be inputted when the user intends to encrypt the original data 20. Each of the supervisor password 21 and the encryption password 22 is 4-16 characters in length, and can be a combination of predetermined symbols including A-Z, 0-9, "=", "-", " [","] ", ".", ",", ";", "\", and "/". Accordingly, when the encryption/decryption module 2 receives an encryption request and the encryption password 22 from the user, an encryption key 23 is generated randomly. The encryption key 23 is used to encrypt the original data 20 into an encrypted text data block 24 (i.e., encrypted data), and the supervisor password 21 and the encryption password 22 are respectively used to encrypt the encryption key 23 to form two encrypted key data blocks 25, 26. The encrypted text data block 24 and the two encrypted key data blocks 25, 26 are merged into an encrypted file 27 to replace the original data 20. The encryption/decryption module 2 will also change the file name of the original data 20 upon creation of the encrypted file 27 (to be described hereinafter) so as to enable the user to easily identify whether the data have been encrypted. Certainly, even if the original data 20 is the encrypted file 27, the same can still be encrypted by inputting the encryption password 22, and content of the encryption password 22 entered at each time can be different. During decryption, it is only necessary to input the encryption passwords 22 in an order that is a reversed order of inputting the encryptionpasswords 22 during encryption. In addition, prior to encryption of the encryption key 23 using the supervisor password 21 and the encryption password 22, the encryption/decryption module 2 extracts a message authentication code of the encryption key 23 according to a specified rule for appending to the encrypted file 27.

During decryption, i.e., when the encryption/decryption module 2 receives a decryption request, the encryption/decryption module 2 will request the user to input a password, and confirm whether the inputted password belongs to the supervisor password 21 or the encryption password 22, e.g., using the inputted password to try to decrypt the two encrypted key data blocks 25, 26 in the encrypted file 27, and extracting a message authentication code of the encrypted key data blocks 25, 26 thus decrypted for comparison with the message authentication code in the encrypted file 27. If the inputted password belongs to the supervisor password 21 or the encryption password 22, the two message authentication codes are identical, and the correct encryption key 23 can be retrieved. The encryption key 23 is then used to decrypt the encrypted text data block 24 into the original data 20. Certainly, after decryption, the encryption/decryption module 2 will also restore the file name of the encrypted file 27 to the file name of the original data 20. Thus, in case the user forgets the encryption password 22, he/she can use the supervisor password 21 to decrypt the encrypted file 27, thereby providing a satisfactory restoring mechanism and convenience.

In addition, as known to those skilled in the art, the numbers of the supervisor password 21 and the encryption password 22 can be adjusted according to requirements. For example, two supervisor passwords 21 can be provided, one set by the user, the other set and kept by the manufacturer. Thus, if the user forgets all the passwords (i.e., the supervisor password 21 and the encryption password 22), he/she can seek assistance from the manufacturer to decrypt the encrypted data.

Further, the user can also change encryption strength according to requirements by submitting an encryption strength setup request to the encryption/decryption module 2, and the encryption/decryption module 2 will display all the available encryption strengths for selection by the user. The preferred embodiment provides a low encryption strength of an encryption key 23 with a length of 128 bits, a medium encryption strength of an encryption key 23 with a length of 192 bits, and a high encryption strength of an encryption key 23 with a length of 256 bits, for the user's selection so as to generate an encryption key 23 with the corresponding length according to the encryption strength selected by the user. To preclude complicated operations during encryption, the encryption strength in this preferred embodiment is preset and is not set during encryption. If the user does not submit a request to setup the encryption strength, the encryption strength will be the encryption strength preset by the manufacturer.

In addition, the user can timely change the supervisor password 21 by merely submitting a request to setup the supervisor password to the encryption/decryption module 2. Then, the encryption/decryption module 2 will correspondingly provide a window for the user to input a new supervisor password 21, and the new supervisor password 21 can be used for subsequent encryption. At the same time, the new supervisor password 21 will be used to re-encrypt the encrypted data, i.e., the encrypted key data block 26 in the encrypted file 27 which was generated as a result of encryption using the old supervisor password 21 will be automatically replaced, so that the previously encrypted file 27 can be decrypted and recovered using the new supervisor password 21.

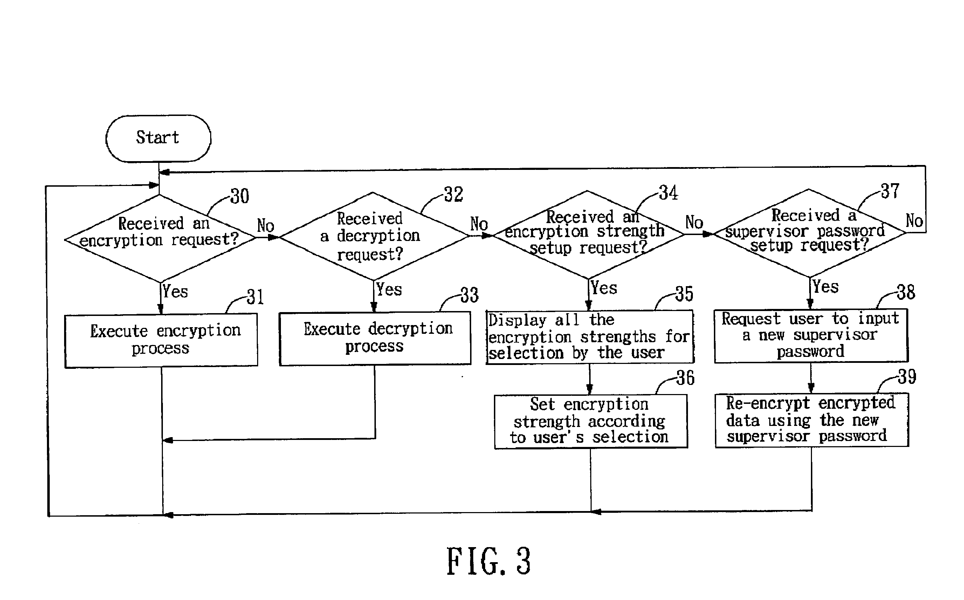

In order that the preferred embodiment can be more easily understood, the operational flow of the encryption/decryption module 2 will be illustrated with reference to Figure 3. It is first noted that an interface for the user to input control commands (e.g., an encryption request, a decryption request, an encryption strength setup request, a supervisor password setup request) is integrated with an existing program interface, such as Windows' file manager, of the computer 1 so as to facilitate the user's encryption and decryption of data.

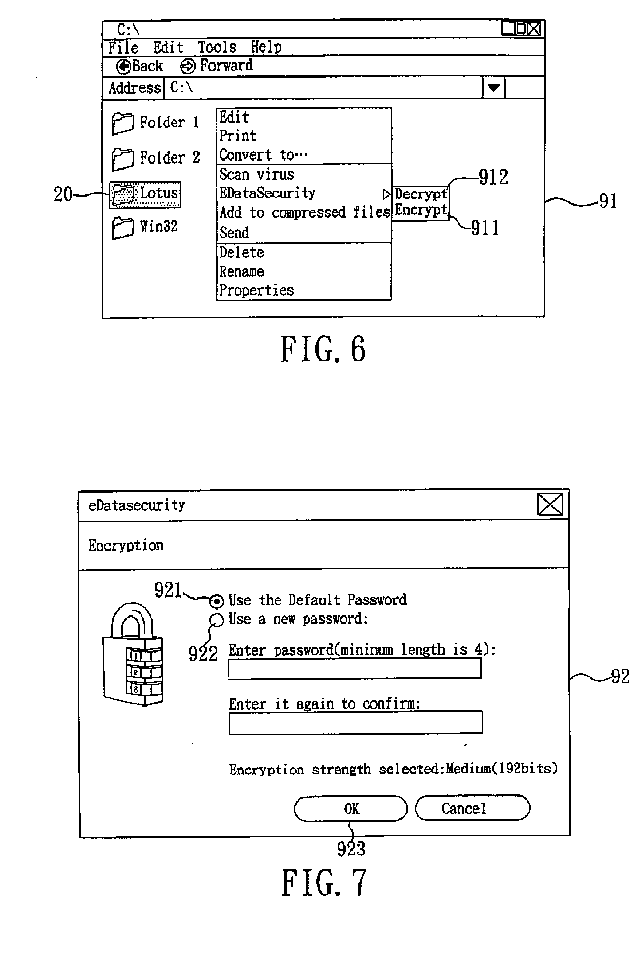

Initially, in step 30, it is determined whether an encryption request was received, i.e., whether the user has submitted a request to encrypt selected original data 20. To illustrate, referring to Figure 6, when the user selects the original data 20, such as a folder, in a file manager window 91 for encryption, pressing the right mouse button will bring up a pull-down menu. The menu contains an encryption item 911 corresponding to the encryption request. The user only needs to click the encrypt ion option 911 to submit an encryption request to the encryption/decryption module 2. If it is determined to be yes in step 30, an encryption process (to be described hereinafter) is executed in step 31. On the contrary, if it is determined to be no in step 30, the flow proceeds to step 32.

In step 32, the encryption/decryption module 2 continues to determine whether a decryption request was received, i.e., whether the user has submitted a decryption request for the encrypted file 27. For the example illustrated in Figure 6, when the user desires to decrypt data, such as a folder containing the encrypted file 27, shown in the file manager window 91, it is merely necessary to click the decryption option 912 in order to submit a decryption request to the encryption/decryption module 2. If it is determined to be yes in step 32, a decryptionprocess (to be described hereinafter) will be executed in step 33. On the contrary, if it is determined to be no in step 32, the flow proceeds to step 34.

In step 34, the encryption/decryption module 2 will determine whether an encryption strength setup request was received. If it is determined to be yes in step 34, step 35 is executed to display all the encryption strengths (i.e., low encryption strength, medium encryption strength, and high encryption strength) for the user's selection. After the user has made a selection, step 36 is executed to set the encryption strength according to the encryption strength selected by the user so that the selected encryption strength will be used for encryption in the subsequent encryption process. On the contrary, if it is determined to be no in step 34, the flow proceeds to step 37.

In step 37, the encryption/decryption module 2 determines whether a supervisor password setup request was received. If it is determined to be yes in step 37, step 38 is executed to request the user to input a new supervisor password, and step 39 is executed after receipt of the new supervisor password. Certainly, to enhance security, in step 38, in addition to requesting the user to input the new supervisor password, the user can also be requested to input the old supervisor password so as to confirm the identity of the user, and step 39 is executed only after the user's identity has been confirmed.

After receipt of the new supervisor password, in step 39, the encryption/decryption module 2 will automatically update all the encrypted key data blocks 25 which correspond to the supervisor password 21 in the encrypted files 27, i.e., the encryption keys 23 are encrypted anew using the new supervisor password 21 so as to create new encrypted key data blocks 25 to replace the old encrypted key data blocks 25. Hence, even if the supervisor password 21 is changed, the user can still use the new supervisor password 21 after the change to decrypt the encrypted files 27, thereby achieving more convenient use.

Further, after steps 31, 33, 36 and 39 are ended, the flow returns to step 30. As known to those skilled in the art, the order of the determination steps 30, 32, 34, and 37 can be adjusted according to design requirements, and these steps can also be executed at the same time, without being limited to the disclosure of the preferred embodiment which is provided herein for illustrative purposes.

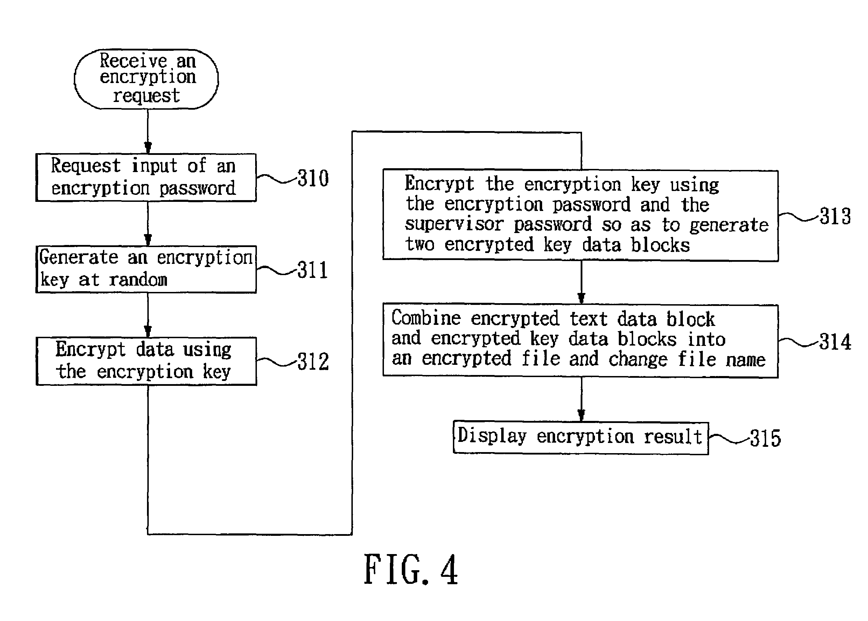

The encryption process of the preferred embodiment will be described hereinafter with reference to Figure 4. The encryption process is activated upon receipt of an encryption request by the encryption/decryption module 2.

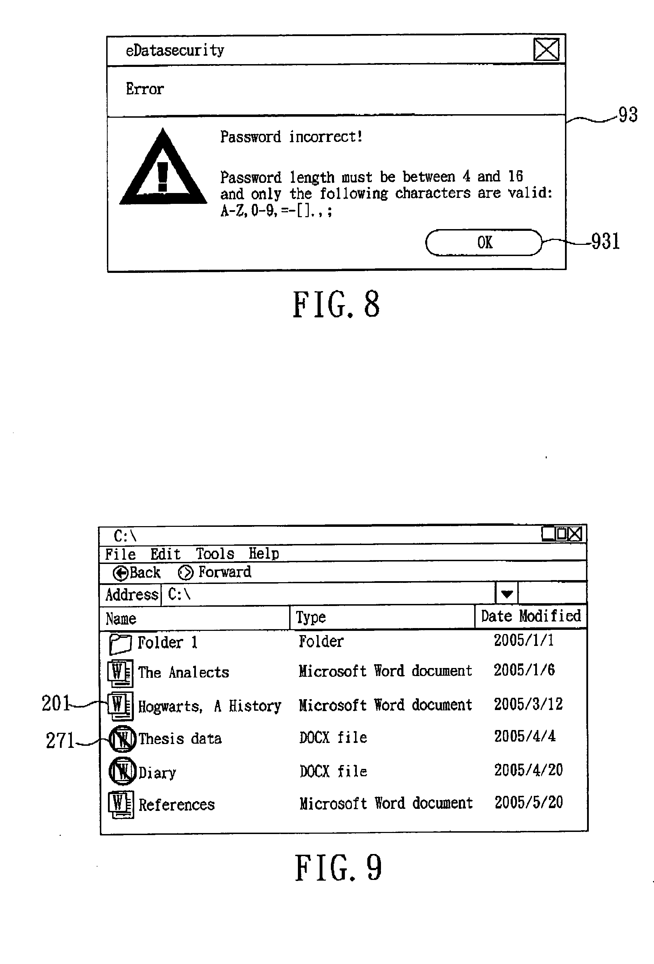

Initially, in step 310, the encryption/decryption module 2 will request the user to input the encryption password 22. For instance, in this embodiment, the encryption/decryption module 2 will correspondingly generate a file encryption dialog window 92 as shown in Figure 7 upon receipt of the encryption request. The file encryption dialog window 92 provides the user with an option 921 to use the old encryption password and an option 922 to input a new encryption password for the user's selection. Besides, when the option 922 to input a new encryption password is selected, a new encryption password of 4-16 characters has to be inputted. After inputting the encryption password 22, the user needs to click a confirmation key (i.e., the OK key) 923 to inform the encryption/decryption module 2. At this time, the encryption/decryption module 2 will inspect whether the inputted encryption password 22 matches a password checking rule, i.e., whether the inputted encryption password 22 has the specified length or whether the encryption password 22 is a combination of the preset symbols. If the encryption/decryption module 2 determines a match, step 311 is executed. If the encryption/decryption module 2 determines a mismatch, a password error window 93 such as that shown in Figure 8 will correspondingly appear to display a message that the inputted encryption password 22 is incorrect. Relevant password checking rules will also be displayed in the password error window 93 to notify the user. After the user has clicked a confirmation key 931 in the password error window 93, the file encryption dialog window 92 will be displayed once again for the user to input another encryption password. Step 311 will not be executed until the inputted encryption password has been checked to be correct. Moreover, in order to assist the user in understanding encryption strengths, the currently set encryption strength will also be displayed in the file encryption dialog window 92 shown in Figure 7.

As shown in Figure 2, in step 311, the encryption/decryption module 2 will randomly generate an encryption key 23 with a length corresponding to the encryption strength according to the currently set encryption strength. Thereafter, step 312 is executed to use the encryption key 23 to encrypt the original data 20 into an encrypted text data block 24, and to extract a message authentication code of the encryption key 23 according to the specified rule. Then, in step 313, the encryption password 22 and the supervisor password 21 are respectively used to encrypt the encryption key 23 into two encrypted key data blocks 25, 26.

Finally, in step 314, the encryption/decryption module 2 combines the encrypted text data block 24, the extracted message authentication code, and the two encrypted key data blocks 25, 26 into an encrypted file 27, and changes the file name of the original data 20. The user is able to decrypt the encrypted file 27 using the encryption password 22 or the supervisor password 21. For the example illustrated in Figure 6, the original data 20 are a folder, and the encryption/decryption module 2 will encrypt the files in the folder one by one, i.e., steps 311-314 will be executed for each file in the folder to correspondingly encrypt the respective file.

Furthermore, the preferred embodiment changes the name of a file by changing the format name of the file, and adds an encryption notation symbol to the icon of the original file format of the file so as to facilitate the user's identification of the original document format of the file. Regarding the change of file name, if the format of a file is supported by the encryption/decryption module 2, such as doc or rif files of Word, csv or xls of Excel, ppt or pps of Powerpoint, txt of text files, zip or rar of compressed files, bmp, jpg, jpeg, gif, tif, or tiff of image files, or others like pdf, htm or html files, a first symbol, such as "X" is added to the original format name of the file. If the format of the file is not supported by the encryption/decryption module 2, a second symbol in the form of an extension, such as ".enc", is added to the original file name. For example, as shown in Figure 9, the format name and file format icon of an encrypted Word file 271 are evidently different from those of a non-encrypted Word file 201 so as to facilitate identification by the user.

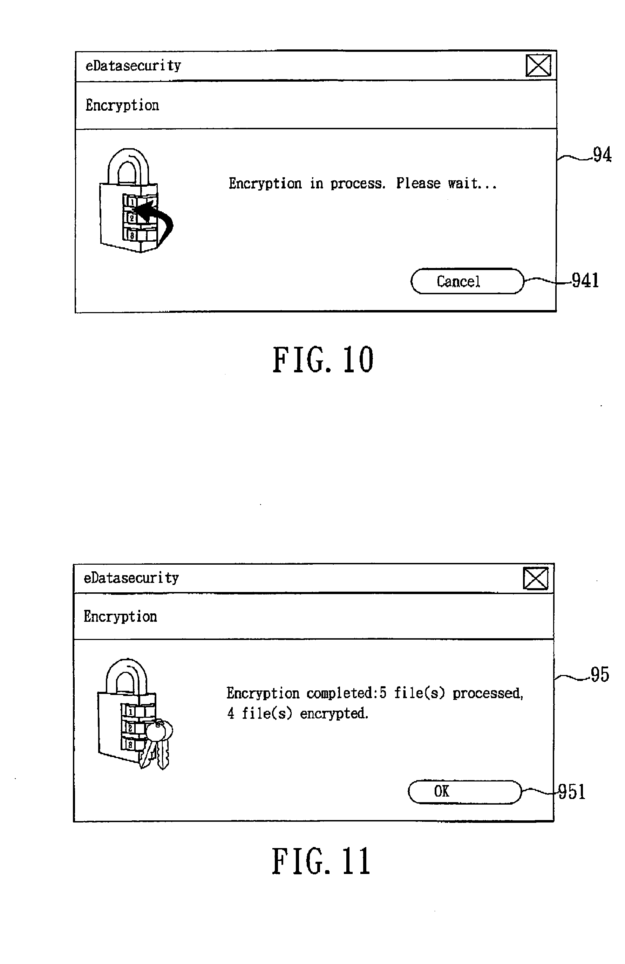

In addition, to enable the user to understand the encryption operation (steps 311-314) of the encryption/decryption module 2 which is in process, the encryption/decryption module 2 will correspondingly display a file encryption in process window 94 such as that shown in Figure 10 during the encryption operation to notify the user that file encryption is in process. Furthermore, there is a cancel key 941 in the file encryption inprocess window 94 for the user to interrupt the encryption operation. When the encryption/decryption module 2 detects clicking of the cancel key 941, the encryption operation will be interrupted, but restoration process will not be performed for the already encrypted file or files.

Finally, after the encryption/decryption module 2 has finished the encryption operation, an encryption result window 95 as shown in Figure 11 will be displayed in step 315 to display a message to the user that the file encryption has been completed. To enable the user to understand the state of encryption, the encryption result window 95 will display the number of processed files, and the number of encrypted files. Upon detection of clicking of a confirmation key 951, the encryption process is ended.

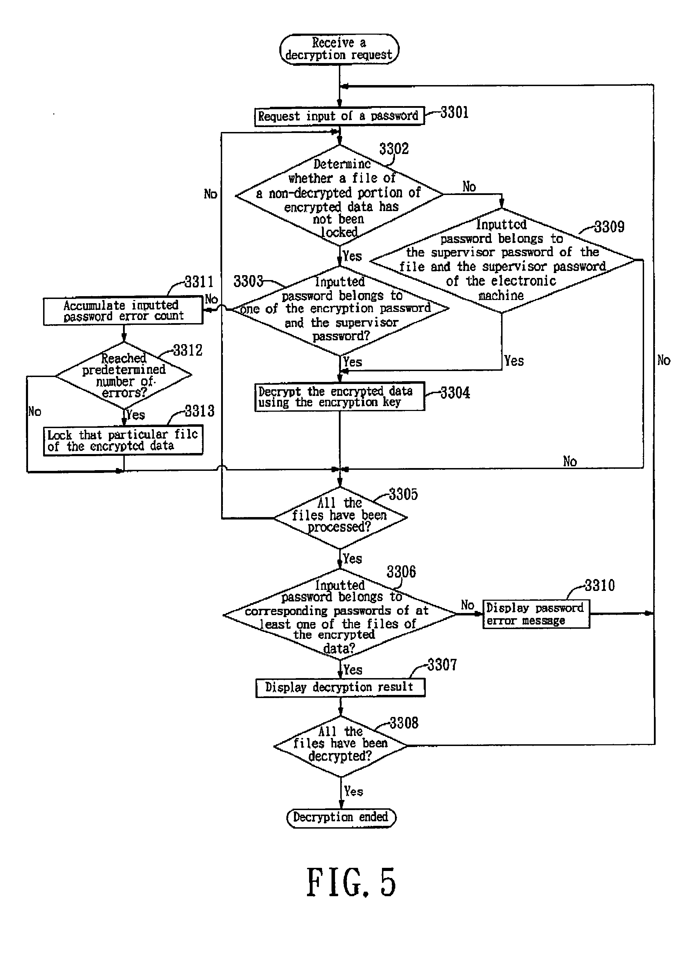

Subsequently, the process of decrypting the data that underwent the aforesaid encryption process will be illustrated with reference to Figure 5. The decryption process is activated upon receipt of a decryption request, e.g., when the decryption option 912 shown in Figure 6 is clicked.

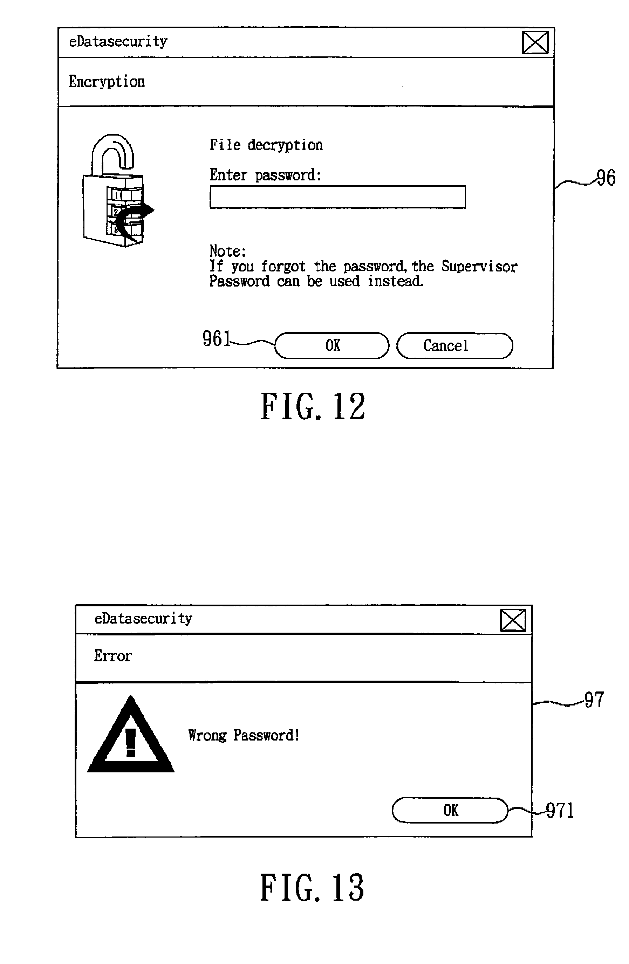

Initially, in step 3301, the encryption/decryption module 2 will request the user to input a password. In this embodiment, the encryption/decryption module 2 displays a file decryption dialog window 96 such as that shown in Figure 12 to request the user to input a password. The user clicks a confirmation key 961 after inputting the password so as to inform the encryption/decryption module 2 that the password has been inputted. At the same time, the file decryption dialog window 96 will display a message to inform the user that the supervisor password 21 can be inputted to restore the content of the encrypted file 27 in case the user forgets the encryption password 22. After the user has inputted the password, the flow proceeds to step 3302.

To prevent a third party from cracking the password by attempting to input various passwords, in this embodiment, the encrypted data (i.e., encrypted file 27) is locked when the number of inputted password errors reaches a predetermined number (e.g., 10 errors) during decryption. When the encrypted data are locked, they can be decrypted only by inputting the supervisor password 21, and can no longer be decrypted using the encryption password 22. At the same time, to prevent the encrypted file 27 frombeing stolen from the computer 1 where the original encryption was done, during decryption of the locked encrypted file 27, the encryption/decryption module 2 will further inspect whether the password inputted by the user belongs to the supervisor password 21 stored in the computer 1 (i.e., the electronic machine) that executes the decryption process, i.e., whether the two passwords are identical. If identical, decryption is allowed to proceed so as to lower the risk of theft and subsequent decryption of the file, thereby enhancing security.

Certainly, the encrypted data selected for decryption can include one or more files or folders or a combination thereof. Similar to the above-described encryption process, the files of the encrypted data are decrypted one by one in the decryption process.

Therefore, in step 3302, the encryption/decryption module 2 first determines whether a file (e.g., the first file) of a non-decrypted portion of the encrypted data is not locked. If it is determined to be yes in step 3302, i.e., the file is not locked, the flow goes to step 3303 to determine whether the inputted password is correct. On the contrary, if it is determined to be no in step 3302, i.e., the file has been locked, the flow goes to step 3309 to determine whether the inputted password is correct.

In step 3303, the encryption/decryption module 2 determines whether the inputted password belongs to one of the encryption password 22 and the supervisor password 21 of the file. In step 3303, the encryption/decryption module 2 first uses the inputted password to decrypt the encrypted key data block 25 or 26 so as to obtain the encryption key, and then extract a message authentication code of the encryption key thus decrypted using the same specified rule used during encryption for comparison with the message authentication code in the encrypted file 27. If there is a match, this indicates that the encryption key thus obtained is the encryption key 23 that was used to encrypt the original data 20, i.e., the inputted password matches the encryption password 22 or the supervisor password 21. If it is determined to be yes in step 3303, the flow goes to step 3304. On the contrary, if it is determined to be no in step 3303, the flow skips to step 3311.

When the inputted password belongs to neither one of the supervisor password 21 and the encryption password 22, i.e., the inputted password is incorrect, the number of inputted password errors is accumulated in step 3311, i.e., adding 1 to the previous cumulative count. Then, in step 3312, it is determined whether the accumulated number of inputted password errors reached the predetermined number of errors (e.g., 10 errors). If it is determined to be yes in step 3312, i.e., the accumulated number of inputted password errors has reached the predetermined number, step 3313 is executed to lock the file. After executing step 3313, the flow skips to step 3305 to determine whether all the files in the encrypted data have been processed. If it is determined to be no in step 3312, the flow skips to step 3305.

After determining that the file has been locked in step 3302, in step 3309, it is determined whether the inputted password belongs to the supervisor password 21 of the file and the supervisor password of the computer 1 (i.e., the electronic machine executing the decryption process). If it is determined to be yes in step 3309, step 3304 is executed. On the contrary, if it is determined to be no in step 3309, the flow skips to step 3305 to process other files, and processing of the file is ended, thereby reducing the risk of theft and subsequent decryption of the data.

Further, in step 3304, the encryption/decryption module 2 decrypts the encrypted text data block 24 using the encryption key 23 thus extracted in step 3303 or 3309 to restore the original data 20. Thereafter, in step 3305, it is determined whether all the files in the encrypted data have been processed. If it is determined to be yes in step 3305, the flow proceeds to step 3306. On the contrary, if it is determined to be no in step 3305, this indicates that a portion of the files in the encrypted data have not undergone decryption processing. Therefore, the flow returns to step 3302 to continue with the processing of another file of the non-decrypted portion of the encrypted data. Accordingly, steps 3302-3305, 3309, and 3311-3313 are repeated until all the files in the encrypted data have undergone decryption processing.

Moreover, after all the files in the encrypted data have undergone decryption processing, some of the files may have been decrypted, while some files have yet to be decrypted due to password mismatch. Therefore, in step 3306, it is determinedwhether the password inputted by the user belongs to the encryption password 22 or the supervisor password 21 corresponding to at least one of the files of the encrypted data, i.e., whether at least one of the files of the encrypted data has been decrypted.

If it is determined to be no in step 3306, this indicates that the inputted password does not belong to any of the encryption passwords 22 or the supervisor password 21 corresponding to all the files in the encrypted data. Step 3310 is executed to display a password error message. In this embodiment, the encryption/decryption module 2 will show a password error window 97 such as that shown in Figure 13 to inform the user that the inputted password is incorrect. When the user clicks a confirmation key 971, the flow returns to step 3301 to re-open the file decryption dialog window 96 so as to request the user to input the password once again. At this time, if all the files of the encrypted data have been locked due to the inputted password error, i.e., if the number of inputted password errors have accumulated to the predetermined number, decryption is automatically ended, and the flow will not return to step 3301.

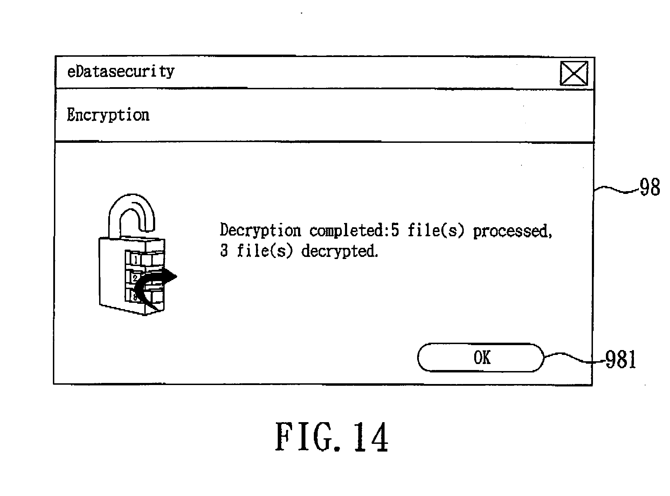

If it is determined to be yes in step 3306, i.e., at least some of the files of the encrypted data have been decrypted, step 3307 is executed, in which the encryption/decryption module 2 correspondingly displays a decryption result window 98 such as that shown in Figure 14 to notify the user of the decryption result, i.e., the number of processed files and the number of decrypted files. Furthermore, when the user clicks a confirmation key 981 in the decryption result window 98, step 3308 is executed, in which the encryption/decryption module 2 determines whether all the files of the encrypted data have been decrypted. If it is determined to be no in step 3308, i.e., there are still non-decrypted files, the flow returns to step 3301 to execute the decryption operation once again and open the file decryption dialog window 96 so as to enable the user to perform decrypt ion of the non-decrypted files of the encrypted data. If it is determined to be yes in step 3308, the decryption process is ended. Certainly, similar to the file encryption in process window 94 associated with the encryption process, during decryption of each of the files of the encrypted data, i.e., prior to displaying the password error window 97 or the decryption result window 98 (before executing steps 3307 or 3310), the preferred embodiment can also display a file decryption in process window (not shown) so as to inform the user that the encrypted data are being decrypted. The user can also utilize a cancel key (not shown) in the file decryption in process window to timely interrupt the decryption process.

Hence, if the user forgets the encryption password 22, in this embodiment, the user can input the supervisor password 21 for decryption, thereby achieving the obj ect of providing a restoring mechanism of the present invention. Furthermore, in this embodiment, during encryption or decryption, the user can select a plurality of files for encryption or decryption at the same time, thereby achieving the effect of convenient operation. Furthermore, the preferred embodiment also utilizes a cumulative inputted password error count to lock a file during decryption. Besides, the requirement for decryption of the locked file is higher than that for an unlocked file, and it is required that the password to be inputted for the locked file should belong to the supervisor password of the encryption/decryption module 2 in the computer 1, i.e., the inputted password has to be identical to the supervisor password of the encryption/decryption module 2 for executing decryption in the computer 1. Thus, enhanced security and reduced risks of theft and subsequent decryption of the encrypted data can be achieved.

Furthermore, the encrypted data can be set to allow access thereto by a plurality of users. For example, an encryption password can be set for each of the users. During encryption, a plurality of encryption passwords are used to perform encryption of the encryption key. Hence, during decryption, each user can use his/her own encryption password to perform decryption of the encryption key, which not only can preclude the risk of a leak when the password is known to too many users, and is also convenient for every user to use. Certainly, although the supervisor password is used as a backup password in the restoring mechanism in this embodiment, in a situation where the encryption process uses a plurality of encryption passwords, one of the encryption passwords can be used as the supervisor password, i.e., one of the users is allowed to use the supervisor password. Furthermore, prior to transmission of the data, the data can be encrypted using the encryption password of the recipient. When there are a plurality of recipients, the data can be encrypted using a plurality of encryption passwords. Hence, it is not necessary to notify all the recipients of the respective encryption passwords. Each recipient can use the encryption password kept thereby as the encryption password for decryption, thereby achieving the effect of enhanced security.

As known to those skilled in the art, the data mentioned herein can be data other than file data, such as e-mail messages, instant messages, short messages, etc. Such data can also be encrypted using a plurality of encryptionpasswords foruseby different users before sending to the recipients, thereby achieving the dual effects of data security and convenient use.

As illustrated, the data encryption and decryption method of the present invention permits encryption using a plurality of passwords (including the encryption password 22 and the supervisor password 21) such that, during decryption, in addition to the encryption password 22 that can be used for decryption, the supervisor password 21 can also be used for restoration. If the user forgets the encryption password 22, he/she can use the supervisor password 21 for decryption. Thus, a restoration function is provided. Furthermore, in the present invention, data can be encrypted using a plurality of passwords agreed upon by a plurality of users during encryption so that the users can use the passwords respectively kept thereby for decryption, thereby achieving the dual effect of security and convenience.

While the present invention has been described in connection with what is considered the most practical and preferred embodiment, it is understood that this invention is not limited to the disclosed embodiment but is intended to cover various arrangements included within the spirit and scope of the broadest interpretation so as to encompass all suchmodifications and equivalent arrangements.

## Claims

1. A data encryption method, **characterized by** the following steps:
(A) upon receipt of an encryption request to encrypt data, requesting input of an encryption password set (22) ; and
(B) upon receipt of the encryption password set (22), encrypting the data into encrypted data such that the encrypted data can be decrypted using one of the encryption password set (22) and a predetermined supervisor password set (21).

2. The data encryption method according to Claim 1,
**characterized in that**, step (B) includes the following sub-steps:
(B-1) upon receipt of the encryption password set (22), randomly generating an encryption key (23);
(B-2) encrypting the data into an encrypted text data block (24) using the encryption key (23), and extracting a message authentication code of the encryption key (23);
(B-3) encrypting the encryption key (23) using the predetermined supervisor password set (21) and the encryption password set (22), respectively, so as to form a plurality of encrypted key data blocks (25, 26) that correspond in number to passwords in the encryption password set (22) and to passwords in the predetermined supervisor password set (21); and
(B-4) combining the encrypted text data block (24), the message authentication code, and the encrypted key data blocks (25, 26) into an encrypted file (27).

3. The data encryption method according to Claim 1,
**characterized in that** the encryption password set (22) includes at least one encryption password, and the predetermined supervisor password set (21) includes at least one supervisor password.

4. The data encryption method as claimed in Claim 2,
**characterized in that**, in sub-step (B-1), the encryption key (23) is generated according to a selected encryption strength.

5. The data encryption method according to Claim 4, further **characterized by** a step (C) of displaying a plurality of encryption strengths for selection by the user upon receipt of a request to setup an encryption strength.

6. The data encryption method according to Claim 5,
**characterized in that** the encryption strengths include a low encryption strength, a medium encryption strength, and a high encryption strength.

7. The data encryption method according to Claim 6,
**characterized in that** an encryption key length of the low encryption strength is 128 bits, an encryption key length of the medium encryption strength is 192 bits, and an encryption key length of the high encryption strength is 256 bits.

8. The data encryption method according to Claim 1,
**characterized in that**, in step (B), a symmetric encryption technique is employed for encryption.

9. The data encryption method according to Claim 2,
further **characterized by** a step (D) of requesting the user to input a new supervisor password set upon receipt of a request to setup the predetermined supervisor password set (21).

10. The data encryption method according to Claim 9,
**characterized in that**, in step (D), re-encrypting the encrypted data using the new supervisor password set upon receipt of the new supervisor password set.

11. The data encryption method according to Claim 1,
**characterized in that** the data are at least one of folders, files, electronic mail messages, instant messages, short message, and a combination thereof.

12. The data encryption method according to Claim 1,
**characterized in that**, in step (B), a file name of the data is changed after encryption of the data.

13. The data encryption method according to Claim 12,
**characterized in that**, in step (B), the file name of the data is changed by adding to the file name of the data one of a first symbol where a file format supporting the data is available, and a second symbol different from the first symbol as an extension where no file format supporting the data is available.
